# EUROPÄISCHE PATENTSCHRIFT

(11) **EP 3 246 732 B1**
(45) Veröffentlichungstag und Bekanntmachung des Hinweises auf die Patenterteilung: **19.06.2019**
(21) Anmeldenummer: 16169827.9
(22) Anmeldetag: 17.05.2016
(51) Int. Cl.: G01V 8/20

(54) **VERFAHREN ZUM BETRIEB EINES LICHTVORHANGS UND LICHTVORHANG**
METHOD TO OPERATE A LIGHT CURTAIN AND LIGHT CURTAIN
MÉTHODE D'OPÉRATION D'UN RIDEAU LUMINEUX ET RIDEAU LUMINEUX

(43) Veröffentlichungstag der Anmeldung: 22.11.2017
(73) Patentinhaber: Leuze electronic GmbH + Co KG, 73277 Owen/Teck (DE)
(72) Erfinder: TKACH, Gennadiy, 81373 München (DE); HUBERT, Jörg, 85244 Röhrmoos (DE)
(74) Vertreter: Ruckh, Rainer Gerhard

(56) Entgegenhaltungen:
- EP-A2- 2 444 825
- WO-A1-2014/147292

## Beschreibung

Die Erfindung betrifft einen Lichtvorhang und ein Verfahren zum Betrieb eines Lichtvorhangs.

Derartige Lichtvorhänge dienen zur Erfassung von Objekten in einem Überwachungsbereich. Hierzu weist ein solcher Lichtvorhang eine Sendeeinheit mit einer Reihenanordnung von Sendern an einem ersten Rand des Überwachungsbereichs auf. Weiterhin ist in der Sendeeinheit eine Steuereinheit zur Steuerung der Sender vorgesehen. Der Lichtvorhang weist weiterhin eine Empfangseinheit mit einer Reihenanordnung von Lichtstrahlen empfangenden Empfängern und einer Auswerteeinheit auf. Dabei ist typischerweise jedem Sender ein Empfänger zugeordnet. Die so gebildeten Sender-Empfängerpaare werden zyklisch einzeln nacheinander aktiviert. In der Auswerteeinheit wird in Abhängigkeit der Empfangssignale der Empfänger ein Objektfeststellungssignal generiert. Das Objektfeststellungssignal ist insbesondere als binäres Schaltsignal ausgebildet, dessen Schaltzustände angeben, ob sich ein Objekt im Überwachungsbereich befindet oder nicht. Die Objekterkennung erfolgt dabei nach dem Lichtschrankenprinzip, das heißt in der Auswerteeinheit wird durch eine Schwellwertbewertung der Empfangssignale der Empfänger abgeprüft, ob die Lichtstrahlen der einzelnen Sender ungehindert zu diesen zugeordneten Empfängern geführt sind oder ob der Strahlengang der Lichtstrahlen durch einen Objekteingriff unterbrochen ist.

Derartige Lichtvorhänge können insbesondere im Bereich der Sicherheitstechnik eingesetzt werden. In diesem Fall wird mit dem Schaltsignal des Lichtvorhangs eine Maschine angesteuert, deren Gefahrenbereich mit den Lichtvorhängen überwacht wird. Zur Erfüllung der für den Einsatz im Bereich der Sicherheitstechnik gestellten Sicherheitsanforderungen weist die Auswerteeinheit einen fehlersicheren, insbesondere redundanten Aufbau auf.

Insbesondere dann, wenn der Lichtvorhang als Sicherheitssensor ausgebildet ist, ist es erforderlich, die von der Steuereinheit durchgeführte Aktivierung der Sender sicher zu kontrollieren.

Bei bekannten Lichtvorhängen erfolgt diese Kontrolle dadurch, dass die Ströme, mit denen die einzelnen Sender gespeist werden, kontrolliert werden. Diese Überwachung von Analogsignalen erfordert einen unerwünscht hohen Aufwand an Bauteilen, wodurch die Herstellkosten des Lichtvorhangs erhöht sind.

Die EP 2 444 825 A2 betrifft ein Lichtvorhang, welcher zur Detektion in einem Überwachungsbereich dient und eine Anordnung von Strahlachsen bildenden Sendern und Empfängern aufweist. Die Sender und Empfänger der Strahlachsen sind einzeln oder zu mehreren nacheinander aktivierbar. Die Lichtstrahlen des Senders einer Strahlachse sind bei freiem Überwachungsbereich auf den Empfänger dieser Strahlachse geführt. Mit einer Auswerteeinheit wird in Abhängigkeit der Empfangssignale an den Ausgängen der Empfänger ein Objektfeststellungssignal generiert. Die Sender bilden wenigstens eine Senderkaskade. Die Sender sind mittels einer ersten Ansteuerschaltung ohne strombegrenzenden Widerstand in deren Strompfad direkt einzeln oder zu mehreren aktivierbar. Der Sendestrom wird zentral vorgegeben und ist für die einzelnen Sender individuell anpassbar. Die Empfänger bilden wenigstens eine Empfängerkaskade. Die Empfänger sind mittels einer zweiten einzeln oder zu mehreren aktivierbar. Die Empfangssignale werden ohne einzelne Vorverstärkung. Analogschalter und/oder Impedanzwandler pro Empfänger einem gemeinsamen Gruppenverstärker zugeführt.

Die WO 2014/147292 A1 betrifft einen Lichtvorhang mit einer Anordnung von Sendern und Empfängern. Mit dem Lichtvorhang erfolgt eine Aufzugsüberwachung. Zur Erhöhung der Funktionssicherheit des Lichtvorhangs werden dessen Sender getestet.

Der Erfindung liegt die Aufgabe zugrunde, eine sichere Senderüberwachung für einen Lichtvorhang der eingangs genannten Art bereitzustellen, welche bei geringem Aufwand eine hohe Fehlersicherheit gewährleistet.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zum Betrieb eines Lichtvorhangs, wobei mit dem Lichtvorhang eine Erfassung von Objekten in einem Überwachungsbereich erfolgt. Der Lichtvorhang weist eine eine Anzahl von Lichtstrahlen emittierende Sender aufweisende Sendeeinheit an einem ersten Rand des Überwachungsbereichs, und eine Empfangseinheit an einem zweiten Rand des Überwachungsbereichs auf. Die Empfangseinheit weist eine Anzahl von Lichtstrahlen empfangenden Empfängern und eine Auswerteeinheit, in welcher in Abhängigkeit von Empfangssignalen der Empfänger ein Objektfeststellungssignal generiert wird, auf. Zur Steuerung der Sender ist in der Sendeeinheit eine Steuereinheit vorgesehen und jedem Sender ein digitales Schaltwerk zugeordnet. Den digitalen Schaltwerken sind nacheinander in der Steuereinheit generierte Steuersignale zugeführt, mittels derer die den digitalen Schaltwerken zugeordneten Sender aktiviert oder deaktiviert sind. Jedes digitale Schaltwerk generiert ein binäres Statussignal, dessen Signalzustände angeben, ob der Sender mit den Steuersignalen aktiviert wurde oder nicht. Die binären Statussignale aller digitalen Schaltwerke werden zeitlich nacheinander in die Steuereinheit rückgelesen und dort mit Sollwerten verglichen.

Der Grundgedanke der Erfindung besteht somit darin, dass die Kontrolle der Aktivierung der Sender in der Sendeeinheit auf digitalem Weg erfolgt. Damit kann der konstruktive Aufwand im Vergleich zu einer Kontrolle von Analogsignalen, wie sie bei bekannten Lichtvorhängen erfolgt, erheblich reduziert werden.

Zudem wird eine hohe Fehlersicherheit bei der Kontrolle der Senderaktivierungen erreicht, da in jedem der den Sendern zugeordneten digitalen Schaltwerke anhand des Statussignals die jeweilige Senderaktivierung unmittelbar überprüft wird. Wesentlich hierbei ist, dass mit den binären Steuersignalen die einzelnen Sender adressiert und direkt angesprochen werden können, unabhängig davon, ob der Sender mit dem Steuersignal aktiviert wird oder nicht. Mit der Generierung des binären Statussignals wird eine robuste und sichere Kontrolle der Aktivierung des jeweiligen Senders ermöglicht, wobei die Auswertung der binären Statussignale aller Sender mit geringem Aufwand in der Steuereinheit durchgeführt werden kann.

Vorteilhaft bilden die Sender eine Reihenanordnung, welchen von der Steuereinheit eine Signalleitung und eine Taktleitung zugeführt sind. Mittels der Taktleitung wird ein Taktsignal übertragen. Mittels über die Signalleitung und die Steuerleitung übertragenen Steuersignalen werden die digitalen Schaltwerke der Sender im Takt des Taktsignals zyklisch einzeln nacheinander angesteuert.

Dabei werden die Signalleitungen, die Steuerleitungen und die Taktleitungen beginnend vom an die erste, an die Steuereinheit anschließenden digitalen Schaltwerk durch die einzelnen digitalen Schaltwerke bis zum letzten digitalen Schaltwerk der Reihenanordnung durchgeschleift. Durch die einzelne Ansteuerung der digitalen Schaltwerke im Takt der Taktleitung werden die einzelnen Sender entsprechend einzeln nacheinander angesteuert und gegebenenfalls aktiviert.

Weiter vorteilhaft ist in der Steuereinheit ein Sollvektor gespeichert, der eine Folge von binären Steuersignalen enthält. Der Signalwert jedes binären Steuersignals ist einem Sender der Reihenanordnung zugeordnet und gibt an, ob dieser aktiviert werden soll oder nicht. Die binären Steuersignale werden einzeln nacheinander über die Steuerleitung an die digitalen Schaltwerke der Reihenanordnung der Sender ausgegeben.

Durch den Sollvektor wird somit in der Steuereinheit vorgegeben, welcher der Sender innerhalb eines Zyklus aktiviert wird. Ein bevorzugter Betriebsmodus ist dadurch gegeben, dass alle Sender der Steuereinheit innerhalb des Zyklus aktiviert werden.

Vorteilhaft erfolgt die Ansteuerung der Sender mit dem in der Steuereinheit vorgegebenen Sollvektor in einem ersten Zyklus. Das Rücklesen der binären Statussignale erfolgt in einem direkt auf den ersten Zyklus folgenden zweiten Zyklus. Allgemein erfolgt das Rücklesen der binären Statussignale in jedem Zyklus für den vorhergehenden Zyklus.

Da das Rücklesen der Statussignale in einem zweiten Zyklus erfolgt, der unmittelbar auf den ersten Zyklus folgt, in dem der Sollvektor angegeben wurde, kann unmittelbar im Anschluss an den zweiten Zyklus in der Steuereinheit geprüft werden, ob die Senderaktivierung nach der Vorgabe des Sollvektors tatsächlich durchgeführt wurde. Damit können die einzelnen Sender in dicht aufeinander folgenden Zyklen schnell und vollständig getestet werden.

Gemäß einer vorteilhaften Ausgestaltung des erfindungsgemäßen Verfahrens ist in jedem digitalen Schaltwerk abhängig von dem eingelesenen binären Steuersignal der Sender angesteuert. Abhängig von der Senderaktivierung des Senders wird das binäre Statussignal generiert, das als modifiziertes binäres Steuersignal zum digitalen Schaltwerk des nächsten Senders übertragen wird.

Dabei werden die binären Statussignale, ausgehend von dem an die Steuereinheit anschließenden digitalen Schaltwerk des ersten Senders im Takt des Taktsignals nacheinander zu den digitalen Schaltwerken der folgenden Sender übertragen und vom digitalen Schaltwerk des letzten Senders der Reihenanordnung in die Steuereinheit rückgelesen.

Damit werden die Statussignale im gleichen Takt wie auch die Sender angesteuert und aktiviert, von einem digitalen Schaltwerk zum nächsten weitergeschoben, und, sobald sie das letzte digitale Schaltwerk erreichen, von diesem in die Steuereinheit rückgelesen.

Somit wird unter Nutzung der Funktionen der digitalen Schaltwerke auf konstruktiv einfache Weise ein getaktetes Rücklesen aller Statussignale in die Steuereinheit gewährleistet.

Dabei bilden die in die Steuereinheit rückgelesenen binären Statussignale einen Istvektor, der mit dem Sollvektor verglichen wird.

Da die Statussignale im Takt der Senderansteuerungen an die jeweils nächsten digitalen Schaltwerke weitergegeben werden, ist auf eine schaltungstechnisch sehr einfache Weise gewährleistet, dass unmittelbar in dem zweiten Zyklus, der auf den ersten Zyklus, in welchem der Sollvektor ausgegeben wurde, folgt, der komplette Istvektor in der Steuereinheit vorhanden ist, so dass durch den Vergleich des Istvektors mit dem Sollvektor alle Sender komplett getestet werden können.

Dabei wird für den Fall, dass in der Steuereinheit eine Abweichung des Istvektors von dem Sollvektor registriert wird, in der Steuereinheit eine Fehlermeldung generiert.

Besonders vorteilhaft sind als Fehlermeldung in einem auf den zweiten Zyklus folgenden dritten Zyklus alle Sender deaktiviert, was in der Auswerteeinheit als ein Objekteingriff im Überwachungsbereich registriert wird.

Diese Art der Fehlermeldung bietet sich insbesondere für Lichtvorhänge im Bereich der Sicherheitstechnik an.

Ist nämlich der Lichtvorhang ein Sicherheitssensor, welcher als Objektfeststellungssignal ein binäres Schaltsignal zur Steuerung einer Maschine generiert, wird bei einem Objekteingriff im Überwachungsbereich als Schaltsignal ein Abschaltbefehl für die Maschine generiert.

Dies bedeutet, dass bei einem Objekteingriff, der mit dem Lichtvorhang registriert wird, die zu überwachende Maschine in den sicheren Zustand überführt wird, da durch den Abschaltbefehl die Maschine stillgesetzt wird, so dass von dieser keine Gefahren mehr ausgehen.

Wenn nun bei Aufdecken eines internen Fehlers eine Fehlermeldung derart generiert wird, dass diese zur Ausgabe eines Abschaltbefehls für die Maschine führt, so geht auch im Fehlerfall des Lichtvorhangs die Maschine in den sicheren Zustand, so dass bei einem Fehler im Lichtvorhang keine Gefährdungen mehr von der Maschine ausgehen können.

Gemäß einer vorteilhaften Ausgestaltung der Erfindung wird über Steuersignale, die über die Signalleitung übertragen werden, der Modus des Sendebetriebs jedes Senders vorgegeben.

Während über die Steuersignale der Steuerleitung vorgegeben wird, ob ein Sender aktiviert wird, wird über die Signalleitung vorgegeben, in welcher Form ein Sender Lichtstrahlen emittiert. Generell emittiert jeder Sender Lichtstrahlen in Form von Lichtimpulsen. Über die Signalleitung wird einerseits die Anzahl der vom jeweiligen Sender emittierten Lichtpulse vorgegeben. Weiterhin können die Längen der Lichtimpulse und der darauffolgenden Pausen vorgegeben werden.

Damit können die Lichtimpulse der einzelnen Sender Codierungen bilden, die von den zugeordneten Empfängern erkannt werden. Damit können insbesondere gegenseitige Beeinflussungen der von den einzelnen Sendern emittierten Lichtstrahlen vermieden werden. Weiterhin können dadurch, dass die Codierungen der Lichtimpulse für alle Sender unterschiedlich gewählt werden, wahlweise die Lichtstrahlen eines beliebigen Senders für eine optische Synchronisation des Betriebs der Sender und der Empfänger genutzt werden.

Weiter vorteilhaft wird durch eine zeitlich differenzierte Ansteuerung von Komponenten jedes digitalen Schaltwerks eine Fehlerüberprüfung dieses digitalen Schaltwerks durchgeführt.

Da somit die einzelnen digitalen Schaltwerke auf intern auftretende Fehler geprüft werden können, wird die Fehlersicherheit des Lichtvorhangs weiter erhöht.

Der erfindungsgemäße Lichtvorhang dient zur Erfassung von Objekten in einem Überwachungsbereich, mit einer eine Anzahl von Lichtstrahlen emittierenden Sendern aufweisenden Sendeeinheit an einem ersten Rand des Überwachungsbereichs, und mit einer Empfangseinheit an einem zweiten Rand des Überwachungsbereichs. Die Empfangseinheit weist eine Anzahl von Lichtstrahlen empfangenden Empfängern und eine Auswerteeinheit, in welcher in Abhängigkeit von Empfangssignalen der Empfänger ein Objektfeststellungssignal generiert wird, auf. Die Sendeeinheit weist eine Steuereinheit zur Steuerung der Sender auf. Jedem Sender ist ein digitales Schaltwerk zugeordnet. Die Sender, welchen von der Steuereinheit Steuersignale zugeführt sind, bilden mit dem digitalen Schaltwerk eine Reihenanordnung. In den digitalen Schaltwerken werden binäre Statussignale, welche den Zustand der Sendeaktivierung des dem digitalen Schaltwerk zugeordneten Senders beinhalten, in die Steuereinheit rückgelesen und dort mit Sollwerten verglichen.

Dabei sind die Steuereinheiten mit den digitalen Schaltwerken über eine Steuerleitung, eine Signalleitung und eine Taktleitung verbunden.

Weiterhin weist jedes digitale Schaltwerk ein erstes Flip Flop auf, mittels dessen der zugeordnete Sender in Abhängigkeit von über die Steuerleitung und die Signalleitung übertragenen Steuersignalen angesteuert ist. Jedes digitale Schaltwerk weist ein zweites Flip Flop auf, mittels dessen das binäre Statussignal dem nachfolgenden digitalen Schaltwerk zugeführt ist. Das zweite Flip Flop des letzten digitalen Schaltwerks der Reihenanordnung liest das binäre Ausgangssignal in die Steuereinheit zurück.

Mit den Flip Flops lässt sich auf konstruktiv einfache Weise ein Schaltwerk für die Senderaktivierung und zugleich für die Überprüfung der Senderaktivierung realisieren. Damit weist das digitale Schaltwerk bei einem einfachen konstruktiven Aufbau eine hohe Funktionalität auf.

Weiter vorteilhaft weist jedes digitale Schaltwerk einen dem Sender zugeordneten Leistungstreiber auf.

Durch eine geeignete Ansteuerung des Leistungstreibers im digitalen Schaltwerk können die Amplituden der vom Sender emittierten Lichtimpulse variiert werden.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2:: Einzeldarstellung eines Senders mit einem digitalen Schaltwerk für den Lichtvorhang gemäß Figur 1.
- Figur 3a-f:: Zeitdiagramme von Sendern zur Senderansteuerung für den Lichtvorhang gemäß Figur 1.

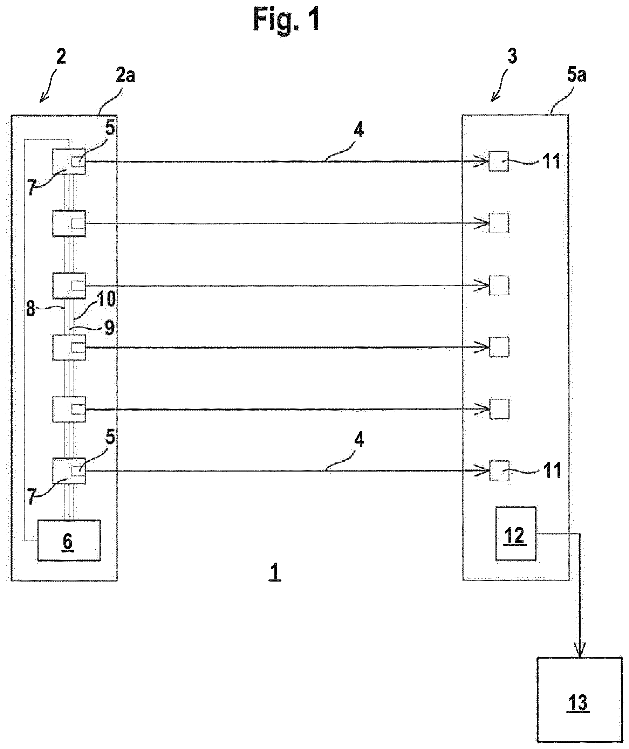

Figur 1 zeigt schematisch ein Ausführungsbeispiel des erfindungsgemäßen Lichtvorhangs 1. Der Lichtvorhang 1 dient zur Erfassung von Objekten in einem Überwachungsbereich. Hierzu weist der Lichtvorhang 1 eine Sendeeinheit 2 an einem ersten Rand des Überwachungsbereichs und eine Empfangseinheit 3 am zweiten, gegenüberliegenden Rand des Überwachungsbereichs auf.

Die Sendeeinheit 2 umfasst ein Gehäuse 2a, in dem eine Reihenanordnung von Lichtstrahlen 4 emittierenden Sendern 5 integriert ist, die von einer Steuereinheit 6 gesteuert sind. Die Sender 5 können von Leuchtdioden oder Laserdioden gebildet sein. Die Steuereinheit 6 besteht aus einem Mikroprozessor oder dergleichen.

Jedem Sender 5 ist ein digitales Schaltwerk 7 zugeordnet.

Die Reihenanordnung umfasst N Sender, wobei im vorliegenden Fall N = sechs Sender 5 vorgesehen sind. Generell kann eine beliebige Anzahl von Sendern 5 vorgesehen sein.

Ausgehend von der Steuereinheit 6 werden eine Steuerleitung 8, eine Signalleitung 9 und eine Taktleitung 10 zum digitalen Schaltwerk 7 des ersten Senders 5, von dort zum digitalen Schaltwerk 7 des zweiten Senders 5 und so weiter bis zum N-ten Sender, das heißt, dem letzten Sender 5 der Reihenanordnung geführt. Vom digitalen Schaltwerk 7 des letzten Senders 5 ist die Steuerleitung 8 zurück zur Steuereinheit 6 geführt.

Die Empfangseinheit 3 weist ebenfalls ein Gehäuse 3a auf, in welchem eine Reihenanordnung von Lichtstrahlen 4 empfangenden Empfängern 11 und eine Auswerteeinheit 12 integriert sind. Die Anzahl N der Empfänger 11 entspricht der Anzahl N der Sender 5. Die Empfänger 11 sind beispielsweise von Photodioden gebildet. Die Auswerteeinheit 12 dient zur Ansteuerung der Empfänger 11 und zur Auswertung deren Empfangssignale. Generell kann die Auswerteeinheit 12 von einer Rechnereinheit gebildet sein. Im vorliegenden Fall ist der Lichtvorhang 1 als Sicherheitssensor ausgebildet. In diesem Fall wird mit dem Lichtvorhang 1 ein Gefahrenbereich einer Maschine überwacht, wobei in Abhängigkeit hiervon die Maschinensteuerung 13 der Maschine angesteuert wird. In diesem Fall weist die Auswerteeinheit 12 einen redundanten fehlersicheren Aufbau auf, beispielsweise in Form zweier sich gegenseitig überwachender Rechnereinheiten.

Jedem Sender 5 ist ein Empfänger 11 zur Ausbildung eines Sender/-Empfängerpaares derart zugeordnet, dass bei freiem Überwachungsbereich die Lichtstrahlen 4 dieses Senders 5 nur auf den zugeordneten Empfänger 11 treffen.

Die Sender 5 werden über die Steuereinheit 6 zyklisch einzeln nacheinander aktiviert. Über eine optische Synchronisation werden die Empfänger 11 zum Sendebetrieb derart synchronisiert, dass die Sender-/Empfängerpaare einzeln nacheinander aktiviert sind.

Zur optischen Synchronisation emittieren alle Sender 5 unterschiedliche Lichtimpulse, die damit voneinander unterscheidbare Codierungen bilden. Damit kann mittels der Lichtimpulse eines beliebigen Sender-/Empfängerpaares die optische Synchronisierung des Lichtvorhangs 1 erfolgen.

Die Objektdetektion bei dem Lichtvorhang 1 erfolgt nach dem Lichtschrankenprinzip. Bei freiem Überwachungsbereich treffen die Lichtstrahlen 4 aller Sender 5 ungehindert auf die Empfänger 11. Ist ein Objekt im Überwachungsbereich vorhanden, wird dadurch der Strahlengang wenigstens eines Sender-/Empfängerpaares unterbrochen, was ist der Auswerteeinheit 12 durch eine Schwellwertbewertung der Empfangssignale erkannt wird. Abhängig hiervon wird in der Auswerteeinheit 12 ein Objektfeststellungssignal generiert. Im vorliegenden Fall wird als Objektfeststellungssignal ein binäres Schaltsignal generiert, dessen Schaltzustände angeben, ob sich im Überwachungsbereich ein Objekt befindet oder nicht. Mit dem Schaltsignal wird die Maschinensteuerung 13 der Maschine angesteuert. Dabei wird der Betrieb der Maschine nur dann freigegeben, wenn sich kein Objekt im Überwachungsbereich befindet. Befindet sich ein Objekt im Überwachungsbereich, wird die Maschine abgeschaltet, das heißt dann bildet das Schaltsignal einen Abschaltbefehl für die Maschine.

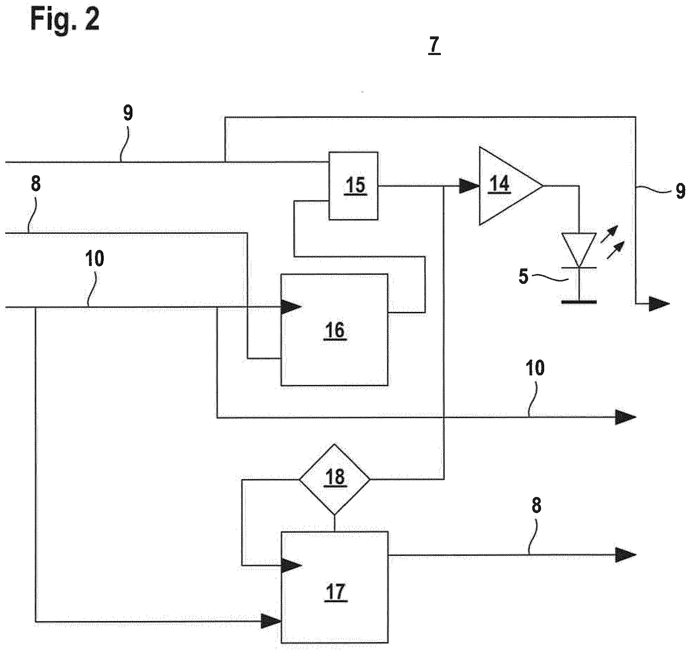

Figur 2 zeigt den Aufbau eines digitalen Schaltwerks 7 für einen Sender 5 der Sendeeinheit 2. Dabei weisen alle digitalen Schaltwerke 7 der Sendeeinheit 2 denselben Aufbau auf.

Das digitale Schaltwerk 7 umfasst einen dem Sender 5 vorgeordneten Leistungstreiber 14. Weiterhin weist das digitale Schaltwerk 7 ein Gatter 15, ein erstes Flip Flop 16 und ein zweites Flip Flop 17 auf. Schließlich ist ein Pegelshifter 18 vorgesehen.

Über die Steuerleitung 8 ist dem digitalen Schaltwerk 7 ein digitales Steuersignal ACT zugeführt. Über die Signalleitung 9 ist dem digitalen Schaltwerk 7 ein Steuersignal MOD zugeführt. Über die Taktleitung 10 ist dem digitalen Schaltwerk 7 ein Taktsignal CLK zugeführt. Wie aus Figur 2 ersichtlich, werden die Steuerleitung 8, die Signalleitung 9 und die Taktleitung 10 am Ausgang des digitalen Schaltwerks 7 dem nächsten (in Figur 2 nicht mehr dargestellten) digitalen Schaltwerk 7 zugeführt.

In der Steuereinheit 6 erfolgt die Ansteuerung der digitalen Schaltwerke 7 derart, dass zyklisch die einzelnen Sender 5 der Reihenanordnung nacheinander aktiviert werden.

Hierzu ist für einen Zyklus in der Steuereinheit 6 ein Sollvektor mit binären Steuersignalen abgespeichert, wobei für jeden Sender 5 der Reihenanordnung ein binäres Steuersignal vorgesehen ist. Ist im Sollvektor für einen Sender 5 als Signalwert des Steuersignals eine "1" gespeichert, bedeutet dies, dass der jeweilige Sender 5 aktiviert werden soll. Entsprechend bedeutet der Signalwert "0", dass der jeweilige Sender 5 nicht aktiviert werden soll. Im vorliegenden Fall enthält der Sollvektor für jeden Sender 5 ein binäres Steuersignal mit dem Signalwert 1, das heißt in dem Zyklus, in welchem die Sender 5 mit den binären Steuersignalen des Sollvektor angesteuert werden, werden im fehlerfreien Betrieb des Lichtvorhangs 1 alle Sender 5 aktiviert und senden Lichtimpulse aus.

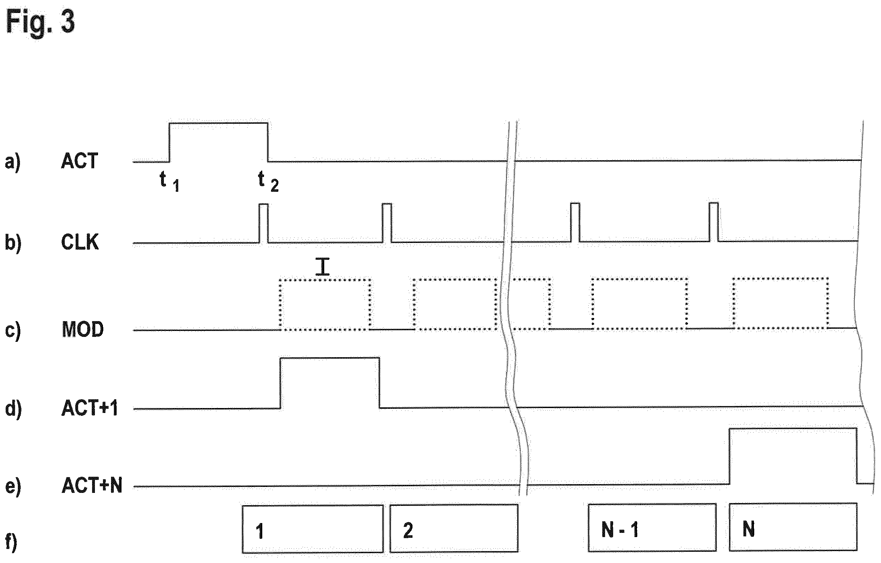

Die Funktion des digitalen Schaltwerks 7 gemäß Figur 2 wird im Folgenden anhand der Zeitdiagramme der Figuren 3a bis 3f erläutert. Dabei ist in Figur 3f die Nummerierung der einzelnen Sender 1 bis N angegeben.

Entsprechend dem im Sollvektor für den ersten Sender 5 gespeicherten digitalen Steuersignal wird dem digitalen Schaltwerk 7 des ersten Senders 5 (dargestellt in Figur 2) das in Figur 3a dargestellte Steuersignal ACT zugeführt, das zwischen den Zeitpunkten t₁ und t₂ den Signalwert 1 aufweist.

Mit den Steuersignalen ACT werden die Sender 5 der Reihenanordnung adressiert und gezielt angesprochen unabhängig davon, ob mit diesem Steuersignal der Sender 5 aktiviert ist oder nicht.

Figur 3a zeigt das Steuersignal ACT, mit dem der erste Sender 5 der Reihenanordnung angesprochen wird. Das Steuersignal weist im Zeitintervall zwischen t₁ und t₂ den Signalwert 1 auf. Mit diesem Steuersignal, dass synchron zum Taktsignal CLK aktiviert ist, wird das erste Flip Flop 16 des digitalen Schaltwerks 7 gesetzt.

Der Ausgang des Flip Flops 16 ist mit dem Steuersignal MOD auf Eingänge des Gatters 15 geführt. Dadurch, dass das Flip Flop 16 gesetzt ist, wird der Lichtimpuls synchron zum Steuersignal MOD (Pulszug I in Figur 3c) angesteuert, wodurch der Sender 5 aktiviert wird. Mit der spezifischen Ausbildung des Pulszugs I des Steuersignals MOD wird die konkrete Senderaktivierung vorgegeben. Je nach Ausbildung des Steuersignals MOD emittiert der Sender 5 einen einzelnen Lichtimpuls oder eine Folge von Lichtimpulsen, wobei die Länge der Lichtimpulse und Pausen zwischen den Lichtimpulsen durch das Steuersignal MOD vorgegeben werden.

Die Ansteuerung des Lichtimpulses und damit die Kontrolle, ob der Sender 5 tatsächlich aktiviert wurde, wird durch den Pegelshifter 18 an das Flip Flop 17 übertragen. Das Flip Flop 17 wird dabei durch die steigende Flanke des Steuersignals MOD (Pulszug I) gesetzt.

Da der Sender ordnungsgemäß aktiviert wurde, nimmt das Flip Flop 17 an seinem Ausgang den Signalwert 1 ein. Dieser Signalwert wird mit dem nächsten Takt des Taktsignals als binäres Statussignal zum nächsten digitalen Schaltwerk 7 weitergeschoben.

Mit dem nächsten Steuersignal ACT+1 (Figur 3d) wird dann das digitale Schaltwerk 7 des nächsten Senders 5 angesteuert, um dann in gleicher Weise diesen Sender 5 zu aktivieren.

Das nächste Steuersignal ACT+1 setzt das Flip Flop 17 des aktuellen digitalen Schaltwerks 7 zurück und setzt dann das Flip Flop 16 des nächsten digitalen Schaltwerks 7, so dass dort in gleicher Weise der Sender 5 aktiviert wird.

Diese Senderaktivierung wird in entsprechender Weise für alle Sender 5 der Reihenanordnung durchgeführt. Dabei werden die Statussignale für die einzelnen Sender 5 vom ersten bis zum letzten digitalen Schaltwerk 7 über die Steuerleitung 8 durchgeschleift und schließlich vom digitalen Schaltwerk 7 des letzten Senders 5 in die Steuereinheit 6 zurückgelesen. Somit stehen nach Ende des Zyklus, der auf den Zyklus folgt, in dem die Sender 5 gemäß dem Sollvektor aktiviert wurden, die Statussignale aller Sender 5 in der Steuereinheit 6 zur Verfügung. Diese bilden einen Istvektor, der mit dem Sollvektor verglichen wird.

Stimmen der Sollvektor und der Istvektor für alle Werte überein, so liegt ein fehlerfreier Senderbetrieb vor. Weicht jedoch der Istvektor von dem Sollvektor in einem oder in mehreren Werten ab, so liegt ein Fehler derart vor, dass ein oder mehrere Sender 5 der Reihenanordnung nicht oder nicht korrekt aktiviert wurden. In diesem Fall generiert die Steuereinheit 6 eine Fehlermeldung. Diese Fehlermeldung ist vorteilhaft derart ausgebildet, dass die Steuereinheit 6 in dem Zyklus, der auf den Zyklus, in dem der Istvektor in die Steuereinheit 6 rückgelesen wurde folgt, alle Sender 5 deaktiviert werden. Dies wird von den Empfängern 11 des Lichtvorhangs 1 als Objekteingriff registriert, so dass in der Auswerteeinheit 12 ein Abschaltbefehl für die Maschine generiert wird, so dass diese in den sicheren Zustand übergeht.

Die Funktionalität der digitalen Schaltwerke 7 der Sendeeinheit 2 ist vorzugsweise derart erweitert, dass durch eine Variation der Betriebsspannung über die Leistungstreiber 14 die Ströme der Sender 5 gesteuert werden können, wodurch die Amplituden der Lichtimpulse der Sender 5 verändert werden können. Durch den Pegelshifter 18 ist dabei eine Unabhängigkeit der Funktionen der Komponenten der digitalen Schaltwerke 7 von der Betriebsspannung gewährleistet.

Schließlich kann durch eine zeitlich differenzierte Ansteuerung der Flip Flops 16 und 17 eines digitalen Schaltwerks 7 eine interne Fehlerkontrolle derart durchgeführt werden, dass interne Querschlüsse der Bauelemente des digitalen Schaltwerks 7 aufgedeckt werden.

### Bezugszeichenliste

- (1): Lichtvorhang
- (2): Sendeeinheit
- (2a): Gehäuse
- (3): Empfangseinheit
- (3a): Gehäuse
- (4): Lichtstrahlen
- (5): Sender
- (6): Steuereinheit
- (7): digitales Schaltwerk
- (8): Steuerleitung
- (9): Signalleitung
- (10): Taktleitung
- (11): Empfänger
- (12): Auswerteeinheit
- (13): Maschinensteuerung
- (14): Leistungstreiber
- (15): Gatter
- (16): erstes Flip Flop
- (17): zweites Flip Flop
- (18): Pegelshifter

## Patentansprüche

1. Verfahren zum Betrieb eines Lichtvorhangs (1), wobei mit dem Lichtvorhang eine Erfassung von Objekten in einem Überwachungsbereich erfolgt und der Lichtvorhang (1) eine eine Anzahl von Lichtstrahlen (4) emittierenden Sendern (5) aufweisende Sendeeinheit (2) an einem ersten Rand des Überwachungsbereichs, und eine Empfangseinheit (3) an einem zweiten Rand des Überwachungsbereichs aufweist, wobei die Empfangseinheit (3) eine Anzahl von Lichtstrahlen (4) empfangenden Empfängern (11) und eine Auswerteeinheit (12), in welcher in Abhängigkeit von Empfangssignalen der Empfänger (11) ein Objektfeststellungssignal generiert wird, aufweist, wobei zur Steuerung der Sender (5) in der Sendeeinheit (2) eine Steuereinheit (6) vorgesehen und jedem Sender (5) ein digitales Schaltwerk (7) zugeordnet ist, wobei den digitalen Schaltwerken (7) nacheinander in der Steuereinheit (6) generierte Steuersignale zugeführt sind, mittels derer die den digitalen Schaltwerken (7) zugeordneten Sender (5) aktiviert oder deaktiviert sind, **dadurch gekennzeichnet, dass** jedes digitale Schaltwerk (7) ein binäres Statussignal generiert, dessen Signalzustände angeben, ob der Sender (5) mit den Steuersignalen aktiviert wurde oder nicht, wobei die binären Statussignale aller digitalen Schaltwerke (7) zeitlich nacheinander in die Steuereinheit (6) rückgelesen und dort mit Sollwerten verglichen werden.

2. Verfahren nach Anspruch 1, **dadurch gekennzeichnet, dass** die Sender (5) eine Reihenanordnung bilden, welchen von der Steuereinheit (6) eine Signalleitung (9) und eine Taktleitung (10) zugeführt sind, wobei mittels der Taktleitung (10) ein Taktsignal übertragen wird und mittels über die Signalleitung (9) und die Steuerleitung (8) übertragenen Steuersignalen die digitalen Schaltwerke (7) der Sender (5) im Takt des Taktsignals zyklisch einzeln nacheinander angesteuert sind.

3. Verfahren nach Anspruch 2, **dadurch gekennzeichnet, dass** in der Steuereinheit (6) ein Sollvektor gespeichert ist, der eine Folge von binären Steuersignalen enthält, wobei der Signalwert jedes binären Steuersignals einem Sender (5) der Reihenanordnung zugeordnet ist und angibt ob dieser aktiviert werden soll oder nicht, und dass die binären Steuersignale einzeln nacheinander über die Steuerleitung (8) an die digitalen Schaltwerke (7) der Reihenanordnung der Sender (5) ausgegeben werden.

4. Verfahren nach Anspruch 3, **dadurch gekennzeichnet, dass** die Ansteuerung der Sender (5) mit dem in der Steuereinheit (6) vorgegebenen Sollvektor in einem ersten Zyklus erfolgt, und dass das Rücklesen der binären Statussignale in einem direkt auf den ersten Zyklus folgenden zweiten Zyklus erfolgt.

5. Verfahren nach einem der Ansprüche 3 oder 4, **dadurch gekennzeichnet, dass** in jedem digitalen Schaltwerk (7) abhängig von dem eingelesenen binären Steuersignal der Sender (5) angesteuert ist, und dass abhängig von der Senderaktivierung des Senders (5) das binäre Statussignal generiert wird, das als modifiziertes binäres Steuersignal zum digitalen Schaltwerk (7) des nächsten Senders (5) übertragen wird.

6. Verfahren nach Anspruch 5, **dadurch gekennzeichnet, dass** die binären Statussignale ausgehend von dem an die Steuereinheit (6) anschließenden digitalen Schaltwerk (7) des ersten Senders (5) im Takt des Taktsignals nacheinander zu den digitalen Schaltwerken (7) der folgenden Sender (5) übertragen und vom digitalen Schaltwerk (7) des letzten Senders (5) der Reihenanordnung in die Steuereinheit (6) rückgelesen werden.

7. Verfahren nach Anspruch 6, **dadurch gekennzeichnet, dass** die in die Steuereinheit (6) rückgelesenen binären Statussignale einen Istvektor bilden, der mit dem Sollvektor verglichen wird.

8. Verfahren nach Anspruch 7, **dadurch gekennzeichnet, dass** für den Fall, dass in der Steuereinheit (6) eine Abweichung des Istvektors von dem Sollvektor registriert wird, in der Steuereinheit (6) eine Fehlermeldung generiert wird.

9. Verfahren nach Anspruch 8, **dadurch gekennzeichnet, dass** als Fehlermeldung in einem auf den zweiten Zyklus folgenden dritten Zyklus alle Sender (5) deaktiviert sind, was in der Auswerteeinheit (12) als ein Objekteingriff im Überwachungsbereich registriert wird.

10. Verfahren nach Anspruch 9, **dadurch gekennzeichnet, dass** der Lichtvorhang (1) ein Sicherheitssensor ist, welcher als Objektfeststellungssignal ein binäres Schaltsignal zur Steuerung einer Maschine generiert, wobei bei einem Objekteingriff im Überwachungsbereich als Schaltsignal ein Abschaltbefehl für die Maschine generiert wird.

11. Verfahren nach einem der Ansprüche 1 bis 10, **dadurch gekennzeichnet, dass** über Steuersignale, die über die Signalleitung (9) übertragen werden, der Modus des Sendebetriebs jedes Senders (5) vorgegeben wird.

12. Lichtvorhang zur Erfassung von Objekten in einem Überwachungsbereich, mit einer eine Anzahl von Lichtstrahlen (4) emittierenden Sendern (5) aufweisenden Sendeeinheit (2) an einem ersten Rand des Überwachungsbereichs, und mit einer Empfangseinheit (3) an einem zweiten Rand des Überwachungsbereichs, wobei die Empfangseinheit (3) eine Anzahl von Lichtstrahlen (4) empfangenden Empfängern (11) und eine Auswerteeinheit (12), in welcher in Abhängigkeit von Empfangssignalen der Empfänger (11) ein Objektfeststellungssignal generiert wird, aufweist, wobei die Sendeeinheit (2) eine Steuereinheit (6) zur Steuerung der Sender (5) aufweist, wobei jedem Sender (5) ein digitales Schaltwerk (7) zugeordnet ist, wobei die Sender (5) mit dem digitalen Schaltwerk (7) eine Reihenanordnung bilden, welchen von der Steuereinheit (6) Steuersignale zugeführt sind, **dadurch gekennzeichnet, dass** in den digitalen Schaltwerken (7) generierte binäre Statussignale, welche den Zustand der Sendeaktivierung des dem digitalen Schaltwerk (7) zugeordneten Senders (5) beinhalten, zeitlich nacheinander in die Steuereinheit (6) rückgelesen und dort mit Sollwerten verglichen werden.

13. Lichtvorhang nach Anspruch 12, **dadurch gekennzeichnet, dass** die Steuereinheiten (6) mit den digitalen Schaltwerken (7) über eine Steuerleitung (8), eine Signalleitung (9) und eine Taktleitung (10) verbunden sind.

14. Lichtvorhang nach einem der Ansprüche 12 oder 13, **dadurch gekennzeichnet, dass** jedes digitale Schaltwerk (7) ein erstes Flip Flop (16) aufweist, mittels dessen der zugeordnete Sender (5) in Abhängigkeit von über die Steuerleitung (8) und die Signalleitung (9) übertragenen Steuersignalen angesteuert ist, und dass jedes digitale Schaltwerk (7) ein zweites Flip Flop (17) aufweist, mittels dessen das binäre Statussignal dem nachfolgenden digitalen Schaltwerk (7) zugeführt ist, wobei das zweite Flip Flop (17) des letzten digitalen Schaltwerks (7) der Reihenanordnung das binäre Ausgangssignal in die Steuereinheit (6) zurückliest.

15. Lichtvorhang nach einem der Ansprüche 12 bis 14, **dadurch gekennzeichnet, dass** jedes digitale Schaltwerk (7) einen dem Sender (5) zugeordneten Leistungstreiber (14) aufweist.

## Claims

1. A method for operating a light curtain (1), the light curtain being used to detect objects in a monitoring region, and the light curtain (1) having a transmitting unit (2) which has a number of transmitters (5) emitting light beams (4) at a first edge of the monitoring region, and a receiving unit (3) at a second edge of the monitoring region, the receiving unit (3) having a number of receivers (11) receiving light beams (4) and an evaluation unit (12) in which an object detection signal is generated as a function of reception signals of the receivers (11),
wherein
a control unit (6) is provided in the transmission unit (2) for controlling the transmitters (5) and a digital switching mechanism (7) is assigned to each transmitter (5), wherein control signals generated in the control unit (6) are fed successively to the digital switching mechanisms (7), by means of which control signals the transmitters (5) assigned to the digital switching mechanisms (7) are activated or deactivated, **characterised in that** each digital switching mechanism (7) generates a binary status signal, the signal states of which indicate whether the transmitter (5) has been activated with the control signals or not, the binary status signals of all digital switching mechanisms (7) being read back into the control unit (6) one after the other in time and being compared there with desired values.

2. The method 2 according to claim 1, **characterised in that** the transmitters (5) form a series arrangement to which a signal line (9) and a clock line (10) are fed by the control unit (6), a clock signal being transmitted by means of the clock line (10) and the digital switching mechanisms (7) of the transmitters (5) being cyclically controlled individually one after the other in succession in sync of the clock signal by means of control signals transmitted via the signal line (9) and the control line (8).

3. The method according to claim 2, **characterised in that** a desired vector which contains a sequence of binary control signals is stored in the control unit (6), the signal value of each binary control signal being assigned to a transmitter (5) of the series arrangement and indicating whether the latter is to be activated or not, and **in that** the binary control signals are output individually one after the other via the control line (8) to the digital switching mechanisms (7) of the series arrangement of the transmitters (5).

4. The method according to claim 3, **characterised in that** the control of the transmitters (5) takes place in a first cycle with the desired vector predefined in the control unit (6), and **in that** the binary status signals are read back in a second cycle directly following the first cycle.

5. The method according to one of claims 3 or 4, **characterised in that** the transmitter (5) is activated in each digital switching mechanism (7) as a function of the binary control signal of the transmitters (5) read in the system, and **in that** the binary status signal, which is transmitted as a modified binary control signal to the digital switching mechanism (7) of the next transmitter (5), is generated as a function of the transmitter activation of the transmitter (5).

6. The method according to claim 5, **characterised in that** the binary status signals are transmitted, starting from the digital switching mechanism (7) of the first transmitter (5) which is connected to the control unit (6), successively to the digital switching mechanisms (7) of the following transmitters (5) in sync of the clock signal and are read back into the control unit (6) by the digital switching mechanism (7) of the last transmitter (5) of the series arrangement.

7. The method according to claim 6, **characterised in that** the binary status signals read back into the control unit (6) form an actual vector which is compared with the desired vector.

8. The method according to claim 7, **characterised in that**, in the event that a deviation of the actual vector from the desired vector is registered in the control unit (6), an error message is generated in the control unit (6).

9. The method according to claim 8, **characterised in that**, as an error message in a third cycle following the second cycle, all transmitters (5) are deactivated, which is registered in the evaluation unit (12) as an object intervention in the monitoring region.

10. The method according to claim 9, **characterised in that** the light curtain (1) is a safety sensor which generates a binary switching signal for controlling a machine as an object detection signal, a switch-off command for the machine being generated as a switching signal in the event of an object intervention in the monitoring region.

11. The method according to one of the claims 1 to 10, **characterised in that** the mode of transmission operation of each transmitter (5) is predetermined via control signals which are transmitted via the signal line (9).

12. A light curtain for detecting objects in a monitoring region, having a transmitting unit (2) which has a number of transmitters (5) emitting light beams (4) at a first edge of the monitoring region, and having a receiving unit (3) at a second edge of the monitoring region, the receiving unit (3) having a number of receivers (11) which receive light beams (4) and an evaluation unit (12) in which an object detection signal is generated as a function of received signals from the receiver (11),
the transmitting unit (2) having a control unit (6) for controlling the transmitters (5), each transmitter (5) being assigned a digital switching mechanism (7), the transmitters (5) forming with the digital switching mechanism (7) a series arrangement to which control signals are supplied by the control unit (6), **characterised in that**
binary status signals which are generated in the digital switching units (7) and which contain the state of the sense deactivation of the transmitter (5) assigned to the digital switching unit (7), are read back one after the other in time into the control unit (6) and compared there with setpoint values.

13. The light curtain according to claim 12, **characterised in that** the control units (6) are connected to the digital switching mechanisms (7) via a control line (8), a signal line (9) and a clock line (10).

14. The light curtain according to one of claims 12 or 13, **characterised in that** each digital switching mechanism (7) has a first flip-flop (16) by means of which the associated transmitter (5) is controlled as a function of control signals transmitted via the control line (8) and the signal line (9), and **in that** each digital switching mechanism (7) has a second flip-flop (17) by means of which the binary status signal is fed to the subsequent digital switching mechanism (7), the second flip-flop (17) of the last digital switching mechanism (7) of the series arrangement reading the binary output signal back into the control unit (6).

15. The light curtain according to one of the claims 12 to 14, **characterised in that** each digital switching mechanism (7) has a power driver (14) assigned to the transmitter (5).

## Revendications

1. Procédé d'exploitation d'un rideau lumineux (1), le rideau lumineux étant utilisé pour détecter des objets dans une zone de surveillance, et le rideau lumineux (1) comportant une unité de transmission (2) qui comporte un certain nombre d'émetteurs (5) émettant des faisceaux lumineux (4) sur un premier bord de la zone de surveillance, et une unité de réception (3) au niveau d'un deuxième bord de la zone de surveillance, l'unité de réception (3) comportant un certain nombre de récepteurs (11) recevant des faisceaux lumineux (4) et une unité d'évaluation (12) dans laquelle un signal de détection d'objet est généré en fonction des signaux de réception des récepteurs (11),
dans lequel
une unité de commande (6) est prévue dans l'unité de transmission (2) pour commander les émetteurs (5) et un mécanisme de commutation numérique (7) est associé à chaque émetteur (5), des signaux de commande générés dans l'unité de commande (6) étant envoyés successivement aux mécanismes de commutation numériques (7), au moyen desquels les signaux de commande des émetteurs (5) affectés aux mécanismes de commutation numériques (7) sont activés ou désactivés, **caractérisé en ce que** chaque mécanisme de commutation numérique (7) génère un signal d'état binaire, dont les états de signal indiquent si l'émetteur (5) a été activé ou non avec les signaux de commande, les signaux d'état binaires de tous les mécanismes de commutation numériques (7) étant lus l'un après l'autre dans l'unité de commande (6) et y étant comparés à des valeurs de consigne.

2. Procédé 2 selon la revendication 1, **caractérisé en ce que** les émetteurs (5) forment un agencement en série auquel une ligne de signal (9) et une ligne d'horloge (10) sont alimentées par l'unité de commande (6), un signal d'horloge étant transmis au moyen de la ligne d'horloge (10) et les mécanismes de commutation numériques (7) des émetteurs (5) étant commandés individuellement de manière cyclique les uns après les autres, en synchronisation avec le signal d'horloge au moyen des signaux de commande transmis au moyen de la ligne de signal (9) et la ligne de commande (8).

3. Procédé selon la revendication 2, **caractérisé en ce qu'**un vecteur de consigne contenant une séquence de signaux de commande binaires est mémorisé dans l'unité de commande (6), la valeur de signal de chaque signal de commande binaire étant affectée à un émetteur (5) d'agencement en série et indiquant si celui-ci doit être activé ou non, et **en ce que** les signaux de commande binaires sont transmis individuellement les uns derrière les autres, via la ligne de commande (8), aux mécanismes numériques (7) de l'agencement en série des émetteurs (5), les uns après les autres, en vue de leur commutation.

4. Procédé selon la revendication 3, **caractérisé en ce que** la commande des émetteurs (5) s'effectue dans un premier cycle avec le vecteur de consigne prédéfini dans l'unité de commande (6), et **en ce que** les signaux d'état binaires sont relus dans un second cycle directement après le premier cycle.

5. Procédé selon l'une des revendications 3 ou 4, **caractérisé en ce que** l'émetteur (5) est activé dans chaque mécanisme de commutation numérique (7) en fonction du signal de commande binaire des émetteurs (5) lu dans le système, et **en ce que** le signal d'état binaire qui est transmis au mécanisme de commutation numérique (7) de l'émetteur suivant (5) comme signal de commande binaire modifié est généré en fonction de l'activation de l'émetteur (5).

6. Procédé selon la revendication 5, **caractérisé en ce que** les signaux d'état binaires sont transmis, à partir du mécanisme de commutation numérique (7) du premier émetteur (5) relié à l'unité de commande (6), successivement aux mécanismes de commutation numérique (7) des émetteurs suivants (5) en synchronisation du signal d'horloge et sont lus par le mécanisme de commutation numérique (7) du dernier émetteur (5) de l'agencement en série dans l'unité de commande (6).

7. Procédé selon la revendication 6, **caractérisé en ce que** les signaux d'état binaires lus dans l'unité de commande (6) forment un vecteur réel qui est comparé au vecteur de consigne.

8. Procédé selon la revendication 7, **caractérisé en ce que**, dans le cas où un écart du vecteur réel par rapport au vecteur souhaité est enregistré dans l'unité de commande (6), un message d'erreur est généré dans l'unité de commande (6).

9. Procédé selon la revendication 8, **caractérisé en ce que** tous les émetteurs (5) sont désactivés en tant que message d'erreur dans un troisième cycle suivant le deuxième cycle, lequel est enregistré dans l'unité d'évaluation (12) comme une intervention d'objet dans la zone de surveillance.

10. Procédé selon la revendication 9, **caractérisé en ce que** le rideau lumineux (1) est un capteur de sécurité qui génère un signal de commutation binaire pour la commande d'une machine en tant que signal de détection d'objet, un ordre d'arrêt de la machine étant généré en tant que signal de commutation en cas d'intervention d'un objet dans la zone de surveillance.

11. Procédé selon l'une des revendications 1 à 10, **caractérisé en ce que** le mode de fonctionnement de transmission de chaque émetteur (5) est prédéterminé par l'intermédiaire de signaux de commande qui sont transmis par la ligne de signal (9).

12. Rideau lumineux pour la détection d'objets dans une zone de surveillance, comprenant une unité de transmission (2) qui présente un certain nombre d'émetteurs (5) émettant des faisceaux lumineux (4) sur un premier bord de la zone de surveillance et une unité réceptrice (3) sur un deuxième bord de la zone de surveillance, l'unité réceptrice (3) comprenant un certain nombre de récepteurs (11) qui reçoivent des faisceaux lumineux (4) et une unité d'exploitation (12) dans laquelle un signal de détection d'objet est généré en fonction des signaux reçus par le récepteur (11),
l'unité de transmission (2) comportant une unité de commande (6) pour commander les émetteurs (5), un mécanisme de commutation numérique (7) étant associé à chaque émetteur (5), les émetteurs (5) formant avec le mécanisme de commutation numérique (7) un arrangement en série auquel des signaux de commande sont fournis par l'unité de commande (6), **caractérisé en ce que**
des signaux d'état binaires qui sont générés dans les unités de commutation numériques (7) et qui contiennent l'état de désactivation de la détection du transmetteur (5) affecté à l'unité de commutation numérique (7), sont lus l'un après l'autre dans l'unité de commande (6) et y sont comparés aux valeurs de consigne.

13. Rideau lumineux selon la revendication 12, **caractérisé en ce que** les unités de commande (6) sont reliées aux mécanismes de commutation numériques (7) par une ligne de commande (8), une ligne de signal (9) et une ligne d'horloge (10).

14. Rideau lumineux selon l'une des revendications 12 ou 13, **caractérisé en ce que** chaque mécanisme de commutation numérique (7) présente une première bascule (16) au moyen de laquelle l'émetteur associé (5) est commandé en fonction de signaux de commande transmis par la ligne de commande (8) et la ligne de signal (9), et **en ce que** chaque mécanisme de commutation numérique (7) comporte une deuxième bascule (17) au moyen de laquelle le signal d'état binaire est envoyé au mécanisme de commutation numérique suivant (7), la deuxième bascule (17) du dernier mécanisme de commutation numérique (7) du montage en série lisant le signal de sortie binaire dans la commande (6).

15. Rideau lumineux selon l'une des revendications 12 à 14, **caractérisé en ce que** chaque mécanisme de commutation numérique (7) comporte un circuit d'attaque de puissance (14) affecté à l'émetteur (5).
